# EUROPEAN PATENT APPLICATION

(11) **EP 2 610 801 A1**
(43) Date of publication of application: **03.07.2013**
(21) Application number: 11306786.2
(22) Date of filing: 27.12.2011
(51) Int. Cl.: G06Q 30/00, G06Q 50/14, G06Q 10/02

(54) **Social network travel inspiration engine and method of same**

(71) Applicant: Amadeus, 06410 Biot (FR)
(72) Inventor: The designation of the inventor has not yet been filed
(74) Representative: Hautier, Nicolas

(57) **Abstract**

An integrated system of travel inspiration that facilitates the electronic storage, tracking, sharing and updating of a user's travel-related information over social networks. A social network travel inspiration engine and method proactively generates travel destination proposals to a user based on travel destinations and current locations of members of the user's social network. The social network inspiration engine integrates a one click search module, booking share engine, instant traveler alert module, pricing module, opt-in repository, which may interface with a reservation system. This system may interface with booking systems to facilitate the booking of said travel recommendations upon said recommendation.

## Description

### BACKGROUND OF INVENTION

### 1. Field of Invention

The present invention is directed to an integrated system of travel inspiration that facilitates the electronic storage, tracking, sharing and updating of a user's travel-related information over social networks.

### 2. Discussion of Background Information

Typical modern travel booking systems utilize passenger records which are associated with and contain information relating to a specific booking, such as a booked flight, and which are stored in a reservation system. The passenger record may be a passenger name record ("PNR"), and the reservation system may be a global distribution system ("GDS") containing information relating to a specific booking.

Additionally, current travel search systems are predominantly price-driven. There are numerous travel planning systems and computer programs for providing travel information using information obtained from other travellers. Currently, systems can allow for the tracking of the current and future locations of the systems' users. Certain systems can allow a traveler to query an electronic social network for travel-related information of connected individuals.

Several of these travel planning systems are integrated with airline reservation systems or online travel booking websites which facilitate the booking of travel reservations. However, users generally are required to manually enter their own travel information and perform their own travel-related searches, which can be both time consuming, inefficient, and may also be inaccurate. Some systems may propose travel recommendations based on a traveler's past purchasing behavior, current and or recent travel search queries, and based on information regarding travel by friends within the traveler's social network. However, the user must still initiate the search, as these systems do not proactively propose travel recommendations to the user.

### SUMMARY

A social network travel inspiration engine and method proactively can generate travel destination proposals to a user based on travel destinations and current locations of members of the user's social network. The social network travel inspiration engine may include a centralized server, a one click search module, booking share engine, instant traveler alert module, pricing module, and an opt-in repository, which are integrated with each other, and which interface with a reservation system. Further, this system may interface with booking systems to facilitate the booking of said travel reservations upon the recommendation.

Specifically, the engine and the method make it possible for members of a user's social network to access the user's travel-related information in both social networks and data storage devices, such as mobile devices and computers, and cumulatively display this travel-related information visually. Further, this integrated system can proactively propose travel solutions based on the user's social network, at the lowest available airfare price, and additionally facilitates the booking of the user's travel reservations. The Social Network Travel Inspiration System and Method can be not only utilized by a user for sharing a trip with a friend, but also facilitates the booking of a trip to visit a user's friend in the friend's current location, as obtained from the social network. The computer-implemented social network travel inspiration engine may be accessed by a user via a web module or mobile application. Additionally, the system may transmit a user's travel-related data to members of the user's social network via email messages, mobile messages, or social network applications.

Many travelers would like to share their travel experiences with members of their social networks, but currently, there is no seamless, automatic, accurate and efficient means of facilitating the electronic storage, tracking, and updating of their travel experiences. Given the enormous growth of the social network sector in recent years, current, predominantly price-driven, systems do not adequately propose and manage travel solutions based on a traveler's social network.

According to one embodiment, a computer-implemented social network travel inspiration engine and method may include a centralized server, a one-click search module, a booking share engine, an instant traveler alert module, pricing module, and an opt-in repository, which interface with a reservation system.

In one aspect, an "opt-in" process for users is provided via an opt-in repository that permits a user to share his stored booking data. The opt-in repository may store information about whether a user chooses to share travel-related data with members of its social network. The opt-in repository may be a centralized cross booking system repository that is used to seamlessly store a user's profile with an index to the booking information stored in the reservation system. When a user performs a booking, via any reservation system, the user may "opt-in" to log in to a social network and to choose to share his travel-related data with friends (members of his social network). For a user that has "opted-in," the social network travel inspiration engine seamlessly allows for the access to, and facilitates the collection of a user's booking information, which may be stored as a passenger record in any reservation system. A booking share engine allows a user that has "opted-in" to seamlessly share or post travel-related information in several social networks by transmitting a user's travel-related data to members of said user's social network; it provides the necessary information to the necessary place at the appropriate time. The booking share engine may transmit a user's travel-related data to members of a user's social network. In one embodiment, when a user chooses to opt-in to share travel-related data, the system may share details about respective bookings and may also include comments, such as those encouraging members of the user's social network to join.

Additionally, an instant traveler alert module may generate notifications of new or updated travel-related data, including but not limited to notifications about flight changes, flight delays, flight disruptions, gate changes, date changes, time changes, check-in status, boarding status, or flight departure and arrival information. The social network travel inspiration system may further comprise an opt-in repository which stores information about whether a user chooses to share travel-related data with members of its social network. In another aspect, a unique social network identifier is associated with the user's travel-related data, which facilitates future retrieval of this data. The computer-implemented social network travel inspiration may store this unique social network identifier, which may couple a user's social network profile with travel-related data stored in a reservation system. The social network identifier uniquely identifies the user's friends who have shared their bookings by opting in. The user logs on to the social network travel inspiration system to initiate the authentication process, and upon successful authentication, the system may access the user's social network account data for those users that have "opted-in" to the system. Upon login, a user may choose a particular social network platform from which to retrieve and through which to share travel-related information.

In yet another aspect, a "one-click" search module, which may retrieve travel related data of members of a user's social network form a reservation; it performs the retrieval of travel-related data of the user's friends through several social networks, and which displays visual representations of the travel-related data. This "one-click" search module may be implemented in a mobile application, and may utilize both travel-related data of members of a user's social network and pricing services to propose trips customized to said user, at the lowest available airfare price; this module proposes travel solutions based on the user's social network.

The computer-implemented social network travel inspiration engine may optionally transmit a user's travel-related data to members of the user's social network. The system may proactively generate travel destination proposals to a user based on travel destinations of members of a user's social network, and a pricing module may generate travel reservation options for a particular travel destination based on price.

The social network travel inspiration engine may generate and visually depict travel-related data of members of a user's social network coupled with information about cheapest airfare to travel destinations of members of a user's social network. In certain circumstances a world map with colored markers representing the number of a user's friends that have been to a particular travel destination, or are planning to visit the travel destination (country or city), or current locations of members of a user's social network, is generated. In another aspect, the one-click search module may proactively notify a user when friends publish new trips through the opt-in option.

The details of one or more embodiments are set forth in the following detailed description of the invention and the accompanying drawings. Other objectives, features, and advantages of the invention will be more readily understood upon consideration of the following detailed description of the invention, taken in conjunction with the accompanying drawings, and with the claims.

The social network travel inspiration engine may interface with an instant traveler alert module, which may automatically send notification messages from the centralized server to a user when particular travel-related information such as schedule, flight time, seat, electronic ticket issuance, or waitlist clearance changes; these changes may be based on the occurrence of events associated with flights booked in passenger records. The instant traveler alert module receives event messages based on events occurring on flights booked in passenger records, such as flight departure delays and time initiated actions, and updates passenger records accordingly. The flights booked in passenger record updates may relate to re-seating events which may inform users about any seat number change occurring on his or her booking, or a no-show event which may inform users that a passenger has not shown up for a particular flight. Additionally, time initiated actions may notify the instant traveler alert module about events such as a user not checking in for a given flight, and advertisements which may notify users about special deals proposed by the online travel booking websites through which the users have performed their bookings.

Specifically, a user may choose to opt-in to share travel-related data. If a user choses to opt-in, upon confirmation of a booking, a query containing user and booking travel related data is automatically sent to the centralized server. This data may include a booking identifier which may be used to retrieve a user's booking and to modify it; a social network id, which may be used as a unique identifier; a social network token, which may be used to retrieve user profile data from his or her social network and to push real time notifications to his social network profile; and flight and booking events, which may be events chosen by the user of which to receive update notifications.

After receiving and parsing the query, the centralized server may store this data in the opt-in repository, and may send a query to the instant traveler alert module utilizing a booking identifier and flight and booking events. The booking identifier may be used to locate and retrieve the user travel reservation, and the flight and booking events may be used to update the travel reservation with a flag corresponding to these events; a different flag may correspond to every flight or booking update. When particular events occur, the system will perform a check in the reservation system to find the passenger record containing the flag corresponding to that event. Once the reservation is found, the instant traveler alert module may send a notification to the centralized server containing the booking identifier and the update. Accordingly, the centralized server will take care of identifying the user concerned about this notification. The token corresponding to the user profile will then be retrieved and utilized to establish the connection with the user's chosen social network in order to push update notification to the user's social network.

The instant traveler alert module may communicate with one or possibly several Departure Control Systems ("DCS") of airlines, which may provide the system with flight information during the flight departure phase, and the level of integration between the DCS and the instant traveler alert module may depend on the level of information which may be shared by a user's social network. The reservation system may store a user's passenger record within a reservation system.

### BRIEF DESCRIPTION OF THE DRAWINGS

The present invention is further described in the detailed description which follows, in reference to the noted plurality of drawings by way of non-limiting examples of certain embodiments of the present invention, in which like numerals represent like elements throughout the several views of the drawings, and wherein:
Figure 1 illustrates an exemplary application of a social network travel inspiration engine, which interfaces with a social network to retrieve profile-related data of a user's friends, and transmits said profile-related data, in addition to booking data stored in the reservation system to the centralized server, which may be cross-referenced with the stored booking data, and may be transmitted to a user.
Figure 2 illustrates an exemplary social network travel inspiration engine and its components consisting therein.
Figure 3 depicts the visual representation of the travel-related data of members of a user's social network in the form of a world map with country markers, wherein each marker represents the number of friends that have been to or are expected to be in a particular country, or the current location of a friend.

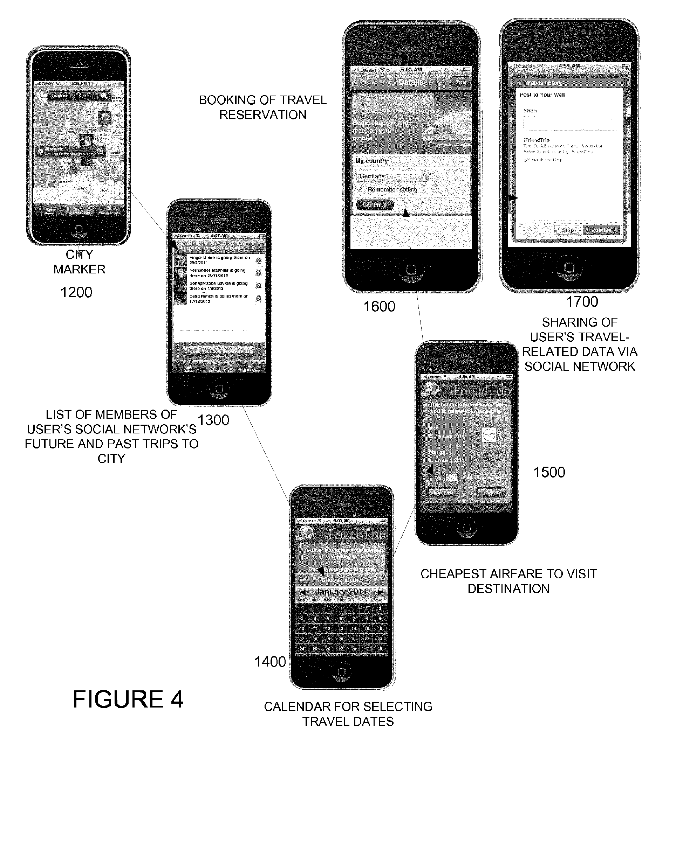

Figure 4 depicts the visual representation of the travel-related data of members of a user's social network in the form of a world map with city markers, wherein each marker represents the number of friends that have been to or are expected to be in a particular city, or current location of members of a user's social network, the list of the members in the user's social network that have been or are planning to go to the respective city, the calendar from which the user may select travel dates to book a trip, and the booking and subsequent sharing of said user's travel related data with other users.
Figure 5 provides a flow chart depicting the "one-click" search module processing.
Figure 6 provides a flow chart depicting the departure city processing.
Figure 7 provides a flow chart depicting the "opt-in" processing.

### DETAILED DESCRIPTION OF EXEMPLARY EMBODIMENTS

A computer-implemented social network travel inspiration engine and method to proactively generate travel destination proposals to a user based on travel destinations of members of the user's social network. The social network travel inspiration engine and method retrieves travel-related data of members of a user's social network, transmits a user's travel-related data to members of said user's social network, and generates notifications of new travel-related data. The reservation system, the one-click search module, the booking share engine, the instant traveler alert module, and the pricing module are integrated with each other.

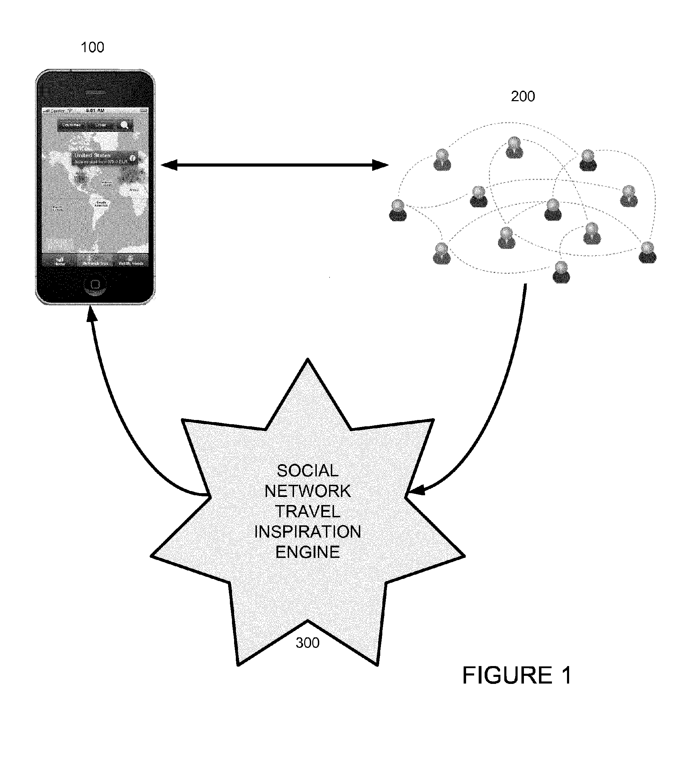

Referring to Figure 1, the invention allows a user and his friends to access each other's travel-related information on both social networks 200 and data storage devices 100, including but not limited to mobile devices and computers. The social network travel inspiration engine 300 utilizes travel profile data associated with members of the user's social network, as well as booking information and other travel-related information contained in the reservation system, to proactively generate travel destination proposals to a user.

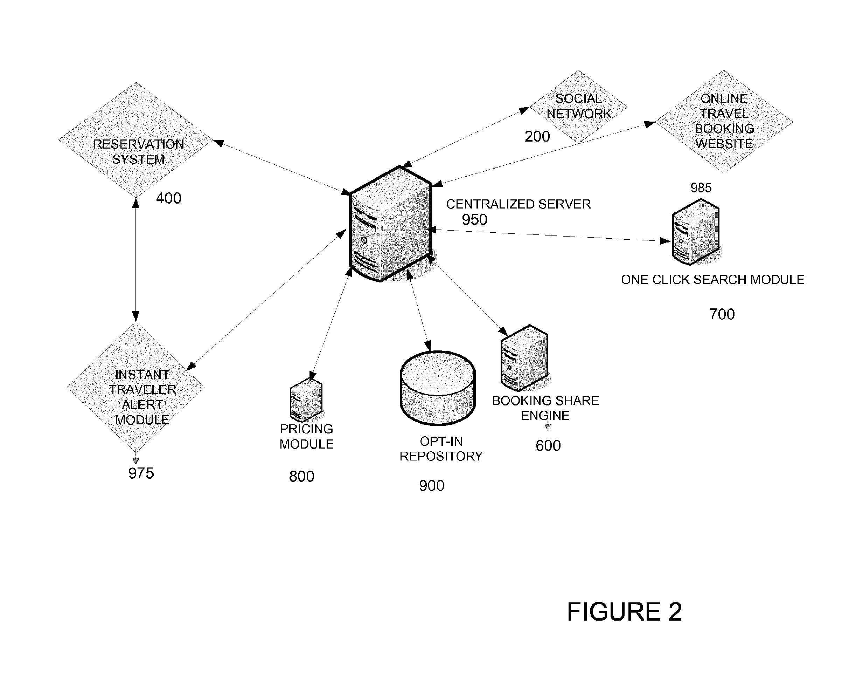

Referring to Figure 2, the social network travel inspiration engine may comprise a centralized server 950, a booking share engine 600, a one-click search module 700, an instant traveler alert module 975, a pricing module 800, which are seamlessly integrated with each other, and may be further communicate with a user's social network 200, and interface with a reservation system 400, which stores the user's passenger records. A passenger record may be stored in a database within a reservation system. The interactions between these components of the social network travel inspiration engine may be defined by the centralized server, which is a gateway connecting all of these system components. The social network travel inspiration system may further comprise an opt-in option wherein an opt-in repository which stores information about whether a user chooses to share travel-related data with members of its social network. The opt-in repository may connect to a social network through the centralized server via the social network application programming interface ("API"). Once connected, this repository will enable the centralized server to associate the user's social network profile with his booking and travel-related data. A unique social network identifier is associated with the user's travel-related data, and facilitates future retrieval of this data. The social network identifier uniquely identifies the user's friends who have shared their bookings by opting in. The opt-in repository may be interfaced with an online travel booking website 985 confirmation webpage through the centralized server, and the user may customize messages shared with members of his social network including the customization of travel-related information.

Accordingly, when a user performs a booking, via any online travel booking website, the user may "opt-in" to log in to a social network and to choose to share his travel-related data with friends (members of his social network). When a user chooses to "opt-in," this option is stored in the opt-in repository through the centralized server. The social network travel inspiration engine allows for the collection of a user's booking information, and automatically stores said user's travel-related data. Through a centralized server, a booking share engine 600 allows a user to post travel-related information in several social networks by transmitting a user's travel-related data to members of said user's social network. In one embodiment, if a user chooses to opt-in to share travel-related data, the system may share details about respective bookings and may also provide for comments, such as those encouraging members of the user's social network to join. The user may share travel-related information via email messages, mobile messages or via a social network application, including but not limited to, posting messages, for example by posting such messages on a friend's wall on facebook.

Additionally, the reservation system 400 and the centralized server 950 may interface with an instant traveler alert module 975, through which a centralized server 950 may automatically send notification messages from to a user when particular travel-related information such as schedule, flight time, seat, electronic ticket issuance, or waitlist clearance changes; these changes may be based on the occurrence of events associated with flights booked in passenger records, when the centralized server 950 has subscribed to the instant traveler alert module. The instant traveler alert module 975 receives event messages based on events occurring on flights booked in passenger records, such as flight departure delays and time initiated actions, and updates passenger records accordingly. The flights booked in passenger record updates may relate to re-seating events which may inform users about any seat number change occurring on his or her booking, or a no-show event which may inform users that a passenger has not shown up for a particular flight. Additionally, time initiated actions may notify the instant traveler alert module about events such as a user not checking in for a given flight, and advertisements which may notify users about special deals proposed by the online travel booking website 985 through which the users have performed their bookings.

Specifically, a user may choose to opt-in to share travel-related data. If a user chooses to opt-in, upon confirmation of a booking, a query containing user and booking travel related data is automatically sent to the centralized server 950. This data may include a booking identifier which may be used to retrieve a user's booking and to modify it; a social network id, which may be used as a unique identifier; a social network token, which may be used to retrieve user profile data from his or her social network and to push real time notifications to his social network profile; and flight and booking events, which may be events chosen by the user of which to receive update notifications.

After receiving and parsing the query, the centralized server 950 may store this data in the opt-in repository 900, and may send a query to the instant traveler alert module utilizing a booking identifier and flight and booking events. The booking identifier may be used to locate and retrieve the user travel reservation, and the flight and booking events may be used to update the travel reservation with a flag corresponding to these events; a different flag may correspond to every flight or booking update. When particular events occur, the system will perform a check in the reservation system to find the passenger record containing the flag corresponding to that event. Once the reservation is found, the instant traveler alert module may send a notification to the centralized server containing the booking identifier and the update. Accordingly, the centralized server 950 will take care of identifying the user concerned about this notification. The token corresponding to the user profile will then be retrieved and utilized to establish the connection with the user's chosen social network in order to push update notification to the user's social network.

The instant traveler alert module may communicate with one or possibly several Departure Control Systems ("DCS") of airlines, which may provide the system with flight information during the flight departure phase, and the level of integration between the DCS and the instant traveler alert module may depend on the level of information which may be shared by a user's social network. The reservation system may store a user's passenger record within a reservation system.

In another aspect a "one-click" search module 700 is provided which performs the retrieval of travel-related data of a user's friends through several social networks, and which displays visual representations of the travel-related data. To acquire this information, the system may first communicate with the social network to get a list of friends from the user's account, and to do this, may send an asynchronous call to the social network that is referred by the identifier received from the user. This "one-click" search module 700 may be a mobile application, and may utilize both travel-related data of members of a user's social network and pricing services, to propose trips customized to said user, at the lowest available airfare price; the module proposes travel solutions based on the user's social network. The user may log in to initiate the authentication process, and upon successful authentication, the system may access the user's social network account data.

In another aspect, the pricing module 800 may generate travel reservation options for a particular travel destination based on price. The pricing module may generate travel recommendations based on travel-related data of members of a user's social network and pricing services, to propose trips customized to said user, at the lowest available price; for example, the pricing module may be utilized to generate a proposed travel reservation with the lowest airfare for the current year to travel to a particular country or city.

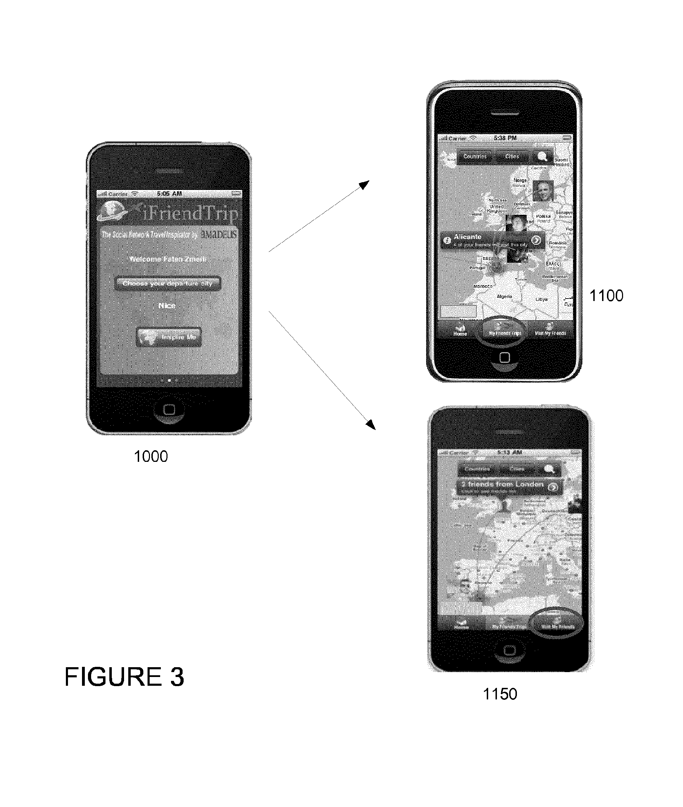

Referring to Figure 3, the screen in 1000 depicts an initial interface from which a user may select a departure city and from which the social network travel inspiration engine may be launched; for example, the system may be launched by a user clicking a button such as an "inspire me" button. The world map with country markers which are displayed to the user after the social network travel inspiration engine is launched to generate travel destination proposals for said user 1100. Each marker represents the number friends of the user that have been to a specific country, or have planned a future trip to the specific country. If the user clicks on one of the markers, a message may be created that displays the country's name and the lowest airfare for the current year to travel to the country, 1100. These markers may be for countries and cities. There is a marker on a country (or city) if and only if there exists at least one active user friend for the respective country (or city). An active user may be defined as a friend of the user that has been to or is going to travel to at least one country, or precisely to a city within the country. In one embodiment, the number may determine the color of the marker. The user's departure city may be depicted by a different color marker. When a user clicks on a marker, the following information may be displayed, but is not limited to, country (or city) name, minimum airfare to travel to that country (or city) and a link to webpages pertaining the country (or city).

In yet another embodiment, the system will facilitate the booking of a user's travel reservations to visit his friends in their current locations 1150. In this embodiment, the generated map displays markers in locations corresponding to a user friend's current location. Once the user selects a location, a list of friends may be displayed, and the system may likewise facilitates the booking of travel reservations to visit the user's friend.

Referring to Figure 4, when a user clicks on a city (or country) marker, an arc between the marker and the departure city of each friend concerned by this marker may appear, 1200. The friend's photo may also be displayed for friends that have chosen the "opt-in" option. A list of friends that are going to visit a particular destination may be displayed, 1300. The list may display the respective departure date of the user's friends. In one embodiment, this list of friends may be displayed by clicking on a pop-up message, like that in 1200. Furthermore, the user has the possibility to join his friends. In another embodiment, if the user clicks on a city (or country) marker where there are no friends with future trips, he can still check for best airfares.

In another aspect, a user may choose his own departure date, 1400. The system may generate a calendar to be set to the desired date of said user. In another embodiment, the user may choose a flexible date by using an interval of departure dates and a variable duration of stay. The social network travel inspiration engine will generate the cheapest (lowest) airfare for the user and will display it to the user, 1500. The cheapest (lowest) airfare may be the minimum airfare to join a friend on the friend's trip. This generated cheapest (lowest) airfare to join a friend's trip may be on the same or different departure date than the friend and may be from the same or from a different departure city. In another embodiment, the user may select a desired departure city, and the departure city must include an airport. If no departure city is selected, it will default to the user's current location, if such location has an airport, or the closest airport to his current location.

In still another aspect, the social network travel inspiration engine and method facilitates the booking of a user's travel reservation, 1600. A user may choose to opt-in to share travel-related data, and if the user does opt-in, the system may share details about respective bookings and may also include comments, such as those encouraging members of the user's social network to join. The user may share travel-related information via email messages, mobile messages or via a social network application, including but not limited to, posting on a friend's wall in facebook, 1700. In another aspect, the user may confirm the sharing of his travel-related information, and through this confirmation, the system facilitates the user's friends' booking of their own travel reservations.

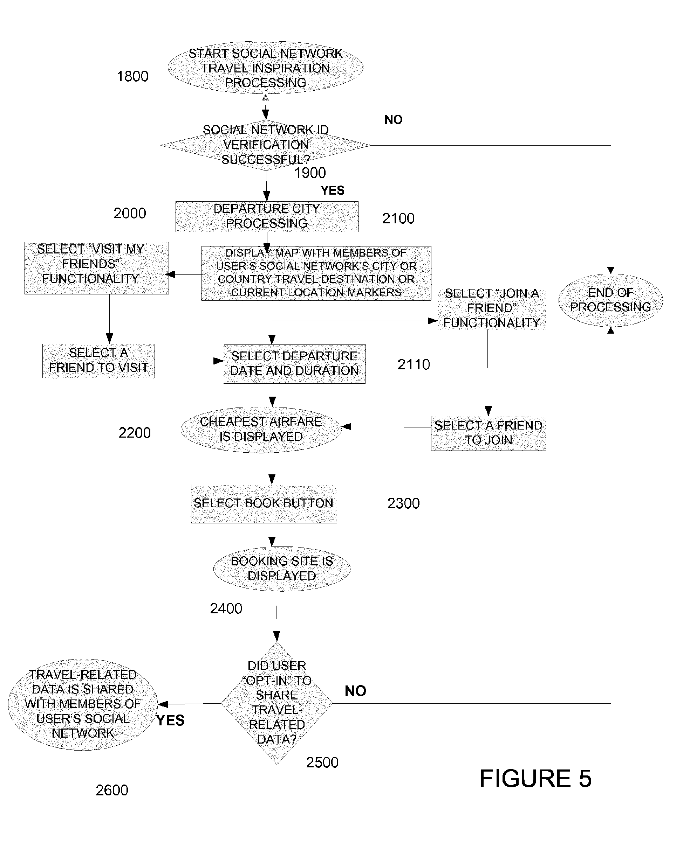

Referring to Figure 5, a unique social network identifier is associated with a user's travel-related data and facilitates future retrieval of this data. The social network identifier uniquely identifies the user's friends who have shared their bookings by opting in, 1900. In one aspect, the user may log in to the system to initiate the authentication process, and upon successful authentication, the system may access the user's social network profile and retrieve account data from it. The user may select his departure city or the departure city may be automatically set by geo-localizing the user and determining the closest airport to the user's location 2000.

In one embodiment, the social network travel inspiration engine may generate a visual representation of travel-related data of members of a user's social network. This visual representation may be a world map with country or city markers that is displayed to the user after the social network travel inspiration engine is launched, to generate travel destination proposals for said user, 2100. Using the "join a friend" functionality, each generated marker represents the number of friends of the user that have been to a specific destination or have planned a future trip to the specific destination. If the user clicks on one of the markers, a message may be created that displays the destination's name and the lowest airfare price to travel to the country, 2200. There may be markers for countries and cities. There is a marker on a country or city if and only if there exists at least one active user friend for the respective country or city. In one aspect of the invention, if a user clicks on a marker, the following information may be displayed, but is not limited to, country or city name, minimum airfare to travel to that country or city and a link to a webpage pertaining to the country or city. In yet another embodiment, the pictures of the user's active friends may be displayed.

In yet another embodiment, the system will facilitate the booking of a user's travel reservations to visit his friends in their current locations 1150. Using the "visit my friends" functionality, the generated map displays markers in locations corresponding to a user friend's current location. Once the user selects a location, a list of friends may be displayed, and the system likewise facilitates the booking of travel reservations to visit the user's friend.

In another aspect of the invention, a user may choose his own departure date, 2110. The system may generate a calendar to be set to the desired departure date of said user. In another embodiment, the user may choose a flexible date by using an interval of departure dates and a variable duration of stay. The social network travel inspiration engine will generate the cheapest (lowest) airfare for the user and will display it to the user, 2200. In still yet another aspect, the social network travel inspiration engine and method facilitates the booking of the user's travel reservation, 2300, 2400. This booking process may redirect a user directly to a booking website 985, and may auto-populate the user's trip information such as departure city, destination city or departure day.

A user may choose to opt-in to share travel-related data, and if the user opts-in, the system may share details about respective bookings and may also include comments, such as those encouraging members of the user's social network to join, 2500. The user may share travel-related information via email messages, mobile messages or via a social network application, including but not limited to, posting on a friend's wall in facebook, 2600. In another aspect, the user may confirm the sharing of his travel-information, and through this confirmation, the system facilitates the user's friends' booking of their own travel reservations.

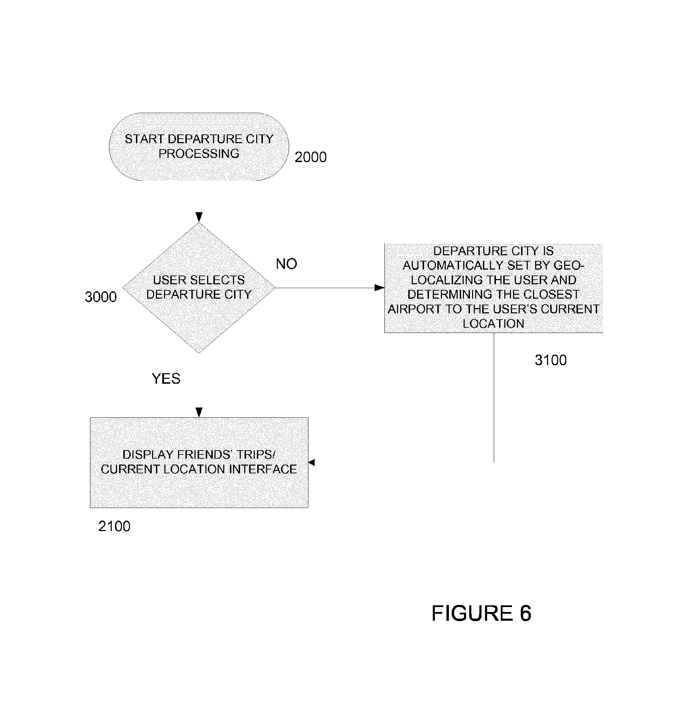

Referring to Figure 6, the user may select his departure city from which proposed travel destinations and reservations will be based 3000. If the user does not select a departure city, the departure city may be automatically set by geo-localizing the user and determining the closest airport to the user's location.

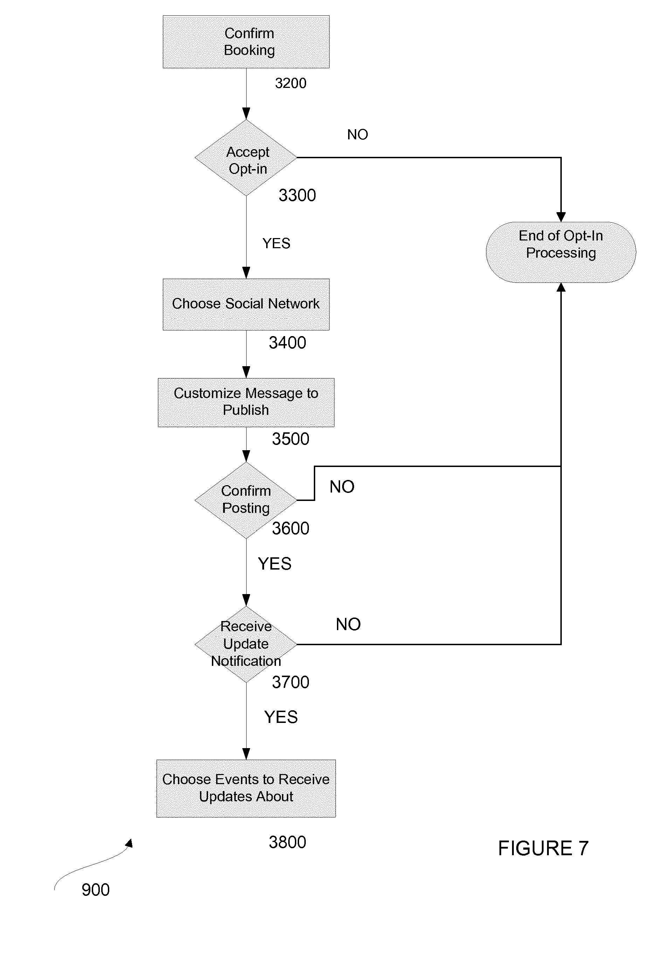

Referring to Figure 7, a user may choose to opt-in to share travel-related data. If a user choses to opt-in 3300, upon confirmation of a booking 3200, a query containing user and booking travel related data is automatically sent to the centralized server. This data may include a booking identifier which may be used to retrieve a user's booking and to modify it; a social network id, which may be used as a unique identifier; a social network token, which may be used to retrieve user profile data from his or her social network and to push real time notifications to his social network profile; and flight and booking events, which may be events chosen by the user of which to receive update notifications.

After receiving and parsing the query, the centralized server may store this data in the opt-in repository, and may send a query to the instant traveler alert module utilizing a booking identifier and flight and booking events. The booking identifier may be used to locate and retrieve the user travel reservation, and the flight and booking events may be used to update the travel reservation with a flag corresponding to these events; a different flag may correspond to every flight or booking update. When particular events occur, the system will perform a check in the reservation system to find the passenger record containing the flag corresponding to that event. Once the reservation is found, the instant traveler alert module may send a notification to the centralized server containing the booking identifier and the update. Accordingly, the centralized server will take care of identifying the user concerned about this notification. The token corresponding to the user profile will then be retrieved and utilized to establish the connection with the user's chosen social network in order to push update notification to the user's social network.

The various social network travel inspiration techniques, methods, and systems described above can be implemented in part or in whole using computer-based systems and methods. Additionally, computer-based systems and methods can be used to augment or enhance the functionality described above, increase the speed at which the functions can be performed, and provide additional features and aspects as a part of or in addition to those described elsewhere in this document. Various computer-based systems, methods and implementations in accordance with the above-described technology are presented below.

In one implementation, a general-purpose computer can have an internal or external memory for storing data and programs such as an operating system (e.g., DOS, Windows 2000™, Windows XP™, Windows NT™, OS/2, UNIX or Linux) and one or more application programs. Examples of application programs include computer programs implementing the techniques described herein, authoring applications (e.g., word processing programs, database programs, spreadsheet programs, or graphics programs) capable of generating documents or other electronic content; client applications (e.g., an Internet Service Provider (ISP) client, an e-mail client, or an instant messaging (IM) client) capable of communicating with other computer users, accessing various computer resources, and viewing, creating, or otherwise manipulating electronic content; and browser applications (e.g., Microsoft's Internet Explorer) capable of rendering standard Internet content and other content formatted according to standard protocols such as the Hypertext Transfer Protocol (HTTP).

One or more of the application programs can be installed on the internal or external storage of the general-purpose computer. Alternatively, in another implementation, application programs can be externally stored in or performed by one or more device(s) external to the general-purpose computer.

The general-purpose computer includes a central processing unit (CPU) for executing instructions in response to commands, and a communication device for sending and receiving data. One example of the communication device is a modem. Other examples include a transceiver, a communication card, a satellite dish, an antenna, a network adapter, or some other mechanism capable of transmitting and receiving data over a communications link through a wired or wireless data pathway.

The general-purpose computer can include an input/output interface that enables wired or wireless connection to various peripheral devices. Examples of peripheral devices include, but are not limited to, a mouse, a mobile phone, a personal digital assistant (PDA), a keyboard, a display monitor with or without a touch screen input, and an audiovisual input device. In another implementation, the peripheral devices can themselves include the functionality of the general-purpose computer. For example, the mobile phone or the PDA can include computing and networking capabilities and function as a general purpose computer by accessing the delivery network and communicating with other computer systems. Examples of a delivery network include the Internet, the World Wide Web, WANs, LANs, analog or digital wired and wireless telephone networks (e.g., Public Switched Telephone Network (PSTN), Integrated Services Digital Network (ISDN), and Digital Subscriber Line (xDSL)), radio, television, cable, or satellite systems, and other delivery mechanisms for carrying data. A communications link can include communication pathways that enable communications through one or more delivery networks.

In one implementation, a processor-based system (e.g., a general-purpose computer) can include a main memory, preferably random access memory (RAM), and can also include a secondary memory. The secondary memory can include, for example, a hard disk drive or a removable storage drive, representing a floppy disk drive, a magnetic tape drive, an optical disk drive (Blu-Ray, DVD, CD drive), magnetic tape, paper tape, punched cards, standalone RAM disks, Iomega Zip drive, etc. The removable storage drive reads from or writes to a removable storage medium. A removable storage medium can include a floppy disk, magnetic tape, optical disk (Blu-Ray disc, DVD, CD) a memory card (CompactFlash card, Secure Digital card, Memory Stick), paper data storage (punched card, punched tape), etc., which can be removed from the storage drive used to perform read and write operations. As will be appreciated, the removable storage medium can include computer software or data.

In alternative embodiments, the secondary memory can include other similar means for allowing computer programs or other instructions to be loaded into a computer system. Such means can include, for example, a removable storage unit and an interface. Examples of such can include a program cartridge and cartridge interface (such as the found in video game devices), a removable memory chip (such as an EPROM or PROM) and associated socket, and other removable storage units and interfaces, which allow software and data to be transferred from the removable storage unit to the computer system.

In one embodiment, the computer system can also include a communications interface that allows software and data to be transferred between computer system and external devices. Examples of communications interfaces can include a modem, a network interface (such as, for example, an Ethernet card), a communications port, and a PCMCIA slot and card. Software and data transferred via a communications interface are in the form of signals, which can be electronic, electromagnetic, optical or other signals capable of being received by a communications interface. These signals are provided to communications interface via a channel capable of carrying signals and can be implemented using a wireless medium, wire or cable, fiber optics or other communications medium. Some examples of a channel can include a phone line, a cellular phone link, an RF link, a network interface, and other suitable communications channels.

In this document, the terms "computer program medium" and "computer usable medium" are generally used to refer to media such as a removable storage device, a disk capable of installation in a disk drive, and signals on a channel. These computer program products provide software or program instructions to a computer system.

Computer programs (also called computer control logic) are stored in the main memory or secondary memory. Computer programs can also be received via a communications interface. Such computer programs, when executed, enable the computer system to perform the features as discussed herein. In particular, the computer programs, when executed, enable the processor to perform the described techniques. Accordingly, such computer programs represent controllers of the computer system.

In an embodiment where the elements are implemented using software, the software can be stored in, or transmitted via, a computer program product and loaded into a computer system using, for example, a removable storage drive, hard drive or communications interface. The control logic (software), when executed by the processor, causes the processor to perform the functions of the techniques described herein.

In another embodiment, the elements are implemented primarily in hardware using, for example, hardware components such as PAL (Programmable Array Logic) devices, application specific integrated circuits (ASICs), or other suitable hardware components. Implementation of a hardware state machine so as to perform the functions described herein will be apparent to a person skilled in the relevant art(s). In yet another embodiment, elements are implanted using a combination of both hardware and software.

In another embodiment, the computer-based methods can be accessed or implemented over the World Wide Web by providing access via a Web Page to the methods described herein. Accordingly, the Web Page is identified by a Universal Resource Locator (URL). The URL denotes both the server and the particular file or page on the server. In this embodiment, it is envisioned that a client computer system interacts with a browser to select a particular URL, which in turn causes the browser to send a request for that URL or page to the server identified in the URL. Typically the server responds to the request by retrieving the requested page and transmitting the data for that page back to the requesting client computer system (the client/server interaction is typically performed in accordance with the hypertext transport protocol or HTTP). The selected page is then displayed to the user on the client's display screen. The client can then cause the server containing a computer program to launch an application to, for example, perform an analysis according to the described techniques. In another implementation, the server can download an application to be run on the client to perform an analysis according to the described techniques.

A number of embodiments of the invention have been described. Nevertheless, it will be understood that various modifications may be made without departing form the spirit and the scope of the invention.

## Claims

1. A computer-implemented social network travel inspiration engine **characterized in that** it comprises:
a centralized server;
a one-click search module that retrieves travel-related data of members of a user's social network from a reservation system;
a booking share engine that transmits a user's travel-related data to members of said user's social network;
a pricing module that generates travel reservation options for a particular travel destination based on price; and
an instant traveler alert module that generates notifications of travel-related data;
wherein the computer-implemented social network travel inspiration engine:
interfaces with a reservation system that stores a user's passenger record within the reservation system;
stores a unique social network identifier for each user, wherein said unique social network identifier couples a user's social network profile with travel-related data stored in the reservation system;
optionally transmits a user's travel-related data to members of said user's social network; and
proactively generates travel destination proposals to a user based on travel destinations of members of the user's social network; and
wherein the centralized server, the one-click search module, the booking share engine, the pricing module and the instant traveler alert module are integrated with each other and interface with a reservation system.

2. The computer-implemented social network travel inspiration engine of claim 1 further comprising an opt-in option, wherein an opt-in repository stores information about whether a user chooses to share travel-related data with members of its social network.

3. The computer-implemented social network travel inspiration engine of claim 1 wherein said social network travel inspiration engine generates and visually depicts travel-related data of members of a user's social network coupled with information about cheapest airfare to travel destinations of members of a user's social network.

4. The computer- implemented social network travel inspiration engine of claim 3 wherein the visual representation is a map; and
wherein said map may depict a number of members of a user's social network that have been to a country or are planning to visit a country or city, or current locations of members of a user's social network.

5. The computer-implemented social network travel inspiration engine of claim 1 wherein the engine inspires a user's booking of a travel reservation.

6. The computer-implemented social network travel inspiration engine of claim 1 wherein the booking share engine may transmit a user's travel-related data to members of said user's social network via email messages, mobile messages, or via social network applications.

7. The computer-implemented social network travel inspiration engine of claim 1 wherein a user may access said social network travel inspiration engine via a web module or via a mobile application.

8. A social network travel inspiration method **characterized in that** it comprises the following steps:
storing a unique social network identifier for each user for coupling a user's social network profile with travel-related data stored in a reservation system;
proactively generating travel destination proposals to a user based on travel destinations of members of the user's social network;
retrieving travel-related data of members of a user's social network;
automatically storing said user's travel-related data;
transmitting said user's travel-related data to members of its social network; and
automatically updating travel-related data, and generating notification of new or updated travel-related data.

9. The social network travel inspiration method of claim 8 further comprising storing information about whether a user chooses to share travel data with members of its social network in an opt-in repository.

10. The social network travel inspiration method of claim 8 further comprising generating
and visually depicting travel-related data of members of a user's social network coupled with information about cheapest airfare to travel destinations of members of a user's social network

11. The social network travel inspiration method of claim 8 wherein the visual representation is a map.

12. The social network travel inspiration method of claim 11 further comprising depicting a number of members of a user's social network that have been to a country or are planning to visit the country, or depicting a number of members of a user's social network that have been to a city or are planning to visit the city, or current locations of member of a user's social network.

13. The social network travel inspiration method of claim 8 further comprising facilitating a user's booking of a travel reservation based on a travel destination of members of the user's social network.

14. The social network travel inspiration method of claim 8 further comprising transmitting a user's travel-related data to members of said user's social network via email messages, mobile messages, or via social network applications.

15. The social network travel inspiration method of claim 8 further comprising interfacing an opt-in repository with an online travel booking website after a user confirms a travel reservation.
